# EUROPEAN PATENT APPLICATION

(11) **EP 4 671 696 A1**
(43) Date of publication of application: **31.12.2025**
(21) Application number: 24184234.3
(22) Date of filing: 25.06.2024
(51) Int. Cl.: G01D 11/30, G01D 21/00

(54) **ELECTRONIC DEVICE ARRANGEMENT**

(71) Applicant: Evosoft Hungary Szamitastechnikai Kft., 1111 Budapest (HU)
(72) Inventor: Majoros, Attila, 2094 Nagykovácsi (HU); Gál, Dávid, 1126 Budapest (HU); Schottner, Kristóf Károly, 1158 Budapest (HU); Varga, Dániel Jonatán, 3528 Miskolc (HU)
(74) Representative: Siemens Patent Attorneys

(57) **Abstract**

The invention relates to an electronic device arrangement comprising at least one core device (1) with at least one power supply unit (2), at least one processor unit (3) and at least one first attachable device (4) which can be attached to the at least one core device (1) to provide a first mechanical connection, a first electrical connection and a first signal connection between the at least one core device (1) and the at least one first attachable device (4) and can be separated from the at least one core device (1).

To enable an effortless assembly and disassembly, it is proposed that the at least one first attachable device (4) is connectable to the at least one core device (1) and separable from the at least one core device (1) via at least one first slidable connection.

## Description

The invention relates to an electronic device arrangement, in particular for internet of things applications, wherein the electronic device arrangement comprises at least one core device with at least one power supply unit and at least one processor unit, wherein the electronic device arrangement further comprises at least one first attachable device which can be attached to the at least one core device to provide a first mechanical connection, a first electrical connection and a first signal connection between the at least one core device and the at least one first attachable device and can be separated from the at least one core device.

### Background of the invention

Electronic devices, in particular internet of things sensors, are often configured for specific tasks like measuring temperatures or collecting particular data. In case other or additional tasks shall be fulfilled, a rearrangement of the electronic devices and/or the installation of additional, separate devices may be necessary. Furthermore, these devices often require a host network or a particular communication infrastructure to e.g. send collected data etc. The host network or the communication infrastructure would e.g. have to be adoptable for a varying number of devices and a varying volume of data traffic and/or would have to be configured to handle a great number of different devices.

Known from the state of the art is e.g. document WO 2020/244684 A1 which discloses an embedded internet of things system for conducting virtual measurement tasks which can be connected to an equipment, sensors, and instruments, wherein measurement result data can be transmitted into a computing cloud.

### Summary of the invention

An object of the herein described invention is to enable an to enable an effortless assembly and disassembly of the first attachable device to and from the core device.

This problem is solved by the subject matter of claim 1, wherein the at least one first attachable device is connectable to the at least one core device and separable from the at least one core device via at least one first slidable connection between the at least one core device and the at least one first attachable device.

With this solution, a highly flexible, stackable, modular device platform, in particular for internet of things applications, is achieved. The electronic device arrangement can be adapted to multiple use-cases and can be expanded as well as reduced easily. A configuration of the electronic device arrangement can be changed flexibly according to the respective requirements. The first attachable module is interchangeable in an effortless manner. E.g. screws between the core device and the first attachable device are not required. It is not necessary e.g. to completely disassemble the electronic device arrangement or to conduct a power-down action etc. By such an interchange operation, the functionality of the electronic device arrangement can be varied rapidly.

Further preferred solutions are described by the dependent claims.

The herein described disclosure further comprises a data transmission network comprising at least two electronic device arrangements according to the invention, wherein at least a first electronic device arrangement and a second electronic device arrangement are configured for radio-based data transmission between at least the first electronic device arrangement and the second electronic device arrangement.

With this solution, the first electronic device arrangement and the second electronic device arrangement can be connected via a single access point without the need of a specific network infrastructure. The first electronic device arrangement and the second electronic device arrangement can be arranged e.g. in buildings and/or open areas and can have a plurality of functions due to their attachable devices. The first electronic device arrangement and the second electronic device arrangement can be senders and receivers and may comprise e.g. wireless fidelity antennas.

Furthermore, a decentralized self-organizing mesh network can be formed with this solution. This mesh can be established by a flexible number of electronic device arrangements according to the invention, wherein e.g. the first electronic device arrangement can be reached by some other electronic device arrangements comprised by the mesh. Said decentralized self-organizing mesh network may e.g. comprise an additional self-update function, wherein e.g. after updated firmware was installed on e.g. the first electronic device arrangement, other electronic device arrangements comprised by the mesh can request the updated firmware and conduct an automatic self-update. Such an automatism may result in an effortless maintenance of the electronic device arrangements comprised by the mesh.

### Brief description of the drawings

The invention will further be explained based on at least one example of the invention with respect to the exemplary drawings, wherein:
- Fig. 1: depicts an example of an electronic device arrangement according to the invention for internet of things applications, and
- Fig. 2: schematically discloses an example of a data transmission network comprising three electronic device arrangements according to the invention.

### Detailed exemplary embodiments of the invention

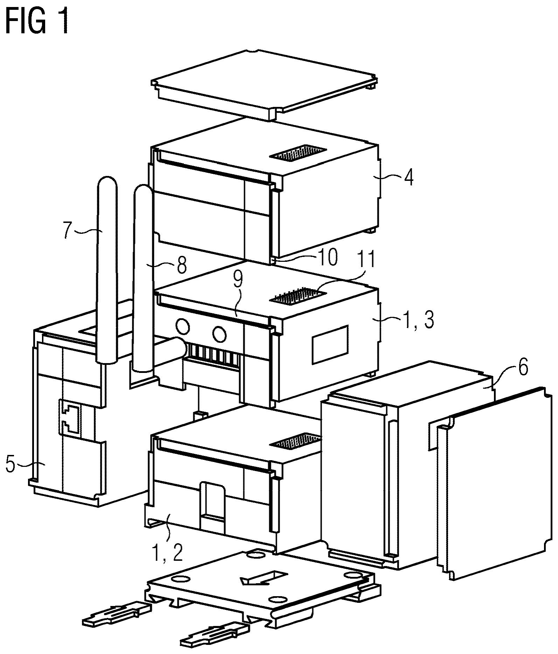

Fig. 1 shows an example of an electronic device arrangement according to the invention for internet of things applications.

The electronic device arrangement comprises a core device 1 with a power supply unit 2 and a processor unit 3, wherein the electronic device arrangement further comprises a first attachable device 4, a second attachable device 5 and a third attachable device 6 which can be attached to the core device 1 to provide first mechanical connections, first electrical connections and first signal connections between the core device 1 on the one hand and the first attachable device 4, the second attachable device 5 and the third attachable device 6 on the other hand and can be separated from the core device 1. The first attachable device 4, the second attachable device 5 and the third attachable device 6 are connectable to the core device 1 and are separable from the core device 1 via first slidable connections between the core device 1 on the one hand and the first attachable device 4, the second attachable device 5 and the third attachable device 6 on the other hand.

The first attachable device 4 comprises a temperature sensor, the second attachable device 5 comprises a pressure sensor and the third attachable device 6 comprises an acoustic sensor (a microphone). According to the invention, it would also be possible that the first attachable device 4, the second attachable device 5 and/or the third attachable device 6 comprise e.g. switches etc.

The first attachable device 4 is connectable to and separable from an upper first side surface of the core device 1, the second attachable device 5 is connectable to and separable from a lateral second side surface of the core device 1 and the third attachable device 6 is connectable to and separable from a lateral third side surface of the core device 1.

The core device 1, the first attachable device 4, the second attachable device 5 and the third attachable device 6 have cuboid shapes and plastic housings.

The power supply unit 2 is replaceable and comprises a lithium-ion battery for a standalone operation of the electronic device arrangement. However, it would also be possible to connect the power supply unit 2 to some electricity network via a cable etc. according to the invention. The power supply unit 2 can operate from alternating current sources as well as from direct current power sources, including all standard industrial power sources.

The processor unit 3 has a dual-core microcontroller, capable of running at 240 MHz, ferroelectric random-access memory and 512MB nonvolatile memory chips, real time clock, two remote terminal unit chips, 868MHz long-range radio, 2.4GHz 802.11 b/g/n wireless fidelity and Bluetooth 5.0 capabilities. All hardware components can be configured individually. Multiple wireless connection types can be utilized.

The core device 1 comprises a long-range radio first antenna 7 for radio-based data transmission from and/or to the electronic device arrangement at a frequency of 868 MHz and a wireless fidelity second antenna 8 for a data transmission at a frequency of 2,4 GHz. The first antenna 7 is capable of covering large areas (e.g. 1 km² in ideal conditions).

The core device 1 further comprises a memory unit, in which a computer program product comprising firmware for the first attachable device 4, the second attachable device 5 and the third attachable device 6 is stored.

The power supply unit 2 and the processor unit 3 of the core device 1 which have separate housings are connectable to each other and are separable from each other via a second slidable connection between the power supply unit 2 and the processor unit 3. By this second slidable connection, the power supply unit 2 and the processor unit 3 can be mechanically connected to each other (second mechanical connection). Furthermore, a second electrical connection as well as a second signal connection can be established between the power supply unit 2 and the processor unit 3.

The first slidable connections and the second slidable connection comprise a first slide rail 9 and further slide rails which are arranged on the housings of the core device 1, the first attachable device 4, the second attachable device 5 and the third attachable device 6. On said housings, counterparts of the first slide rail 9 and the further slide rails are arranged as first protrusion 10 and further protrusions which can be positively and slidably connected to the first slide rail 9 and the further slide rails. Via the first slide rail 9, the further slide rails and the counterparts, the first mechanical connections and the second mechanical connection can be established. The first electrical connections, the first signal connections, the second electrical connection and the second signal connection are established via a first connector pad 11 and further connector pads. However, the first electrical connections, the first signal connections, the second electrical connection and the second signal connection may alternatively be established via electrical and signal cables etc. Furthermore, the first electrical connections and the second electrical connection may also be established via the first slide rail 9, the further slide rails and the counterparts in case they are electrically conductive etc.

The first signal connections between the core device 1 on the one hand and the first attachable device 4, the second attachable device 5 and the third attachable device 6 on the other hand are inter-integrated circuit connections. The core device 1 can automatically recognize the connected first attachable device 4, the second attachable device 5 as well as the third attachable device 6 and start collecting measurements without any manual installation. This is possible due to the firmware which is applicable to a wide variety of known sensors. The core device 1 can handle multiple attachable devices which can comprise multiple sensors or switches etc. The theoretical maximum number of the attachable devices is limited by inter-integrated circuit standard limitations which refer to a maximum number of 1024 individual attachable devices.

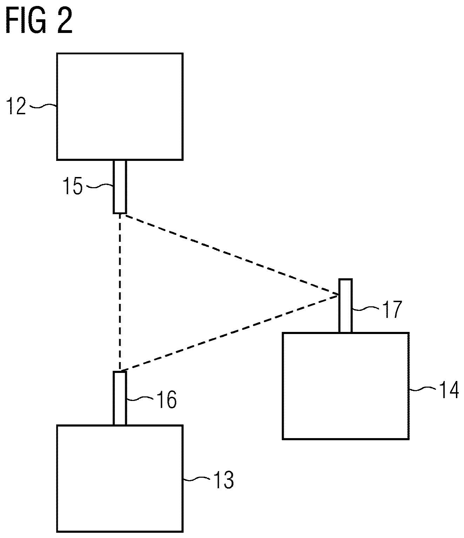

Fig. 2 schematically discloses an example of a data transmission network comprising three electronic device arrangements according to the invention, wherein the electronic device arrangements are configured as described in connection with Fig. 1.

A first electronic device arrangement 12 comprises a first wireless fidelity antenna 15, a second electronic device arrangement 13 comprises a second wireless fidelity antenna 16 and a third electronic device arrangement 14 comprises a third wireless fidelity antenna 17 for radio-based data transmission between the first electronic device arrangement 12, the second electronic device arrangement 13 and the third electronic device arrangement 14. The first electronic device arrangement 12, the second electronic device arrangement 13 and the third electronic device arrangement 14 are senders and receivers.

The data transmission network comprises a self-update function, wherein after updated firmware is installed on the first electronic device arrangement 12, the second electronic device arrangement 13 and the third electronic device arrangement 14 request the updated firmware from the first electronic device arrangement 12 via specific request radio signals. The updated firmware is then transmitted via response radio signals from the first electronic device arrangement 12 to the second electronic device arrangement 13 and to the third electronic device arrangement 14. The second electronic device arrangement 13 and the third electronic device arrangement 14 conduct automatic self-updates on the basis of the transmitted updated firmware.

### Independent of the grammatical term usage, individuals with male, female or other gender identities are included within the term.

### List of Reference

- 1: Core device
- 2: Power supply unit
- 3: Processor unit
- 4: First attachable device
- 5: Second attachable device
- 6: Third attachable device
- 7: First antenna
- 8: Second antenna
- 9: First slide rail
- 10: First protrusion
- 11: First connector pad
- 12: First electronic device arrangement
- 13: Second electronic device arrangement
- 14: Third electronic device arrangement
- 15: First wireless fidelity antenna
- 16: Second wireless fidelity antenna
- 17: Third wireless fidelity antenna

## Claims

1. Electronic device arrangement, in particular for internet of things applications, wherein the electronic device arrangement comprises at least one core device (1) with at least one power supply unit (2) and at least one processor unit (3), wherein the electronic device arrangement further comprises at least one first attachable device (4) which can be attached to the at least one core device (1) to provide a first mechanical connection, a first electrical connection and a first signal connection between the at least one core device (1) and the at least one first attachable device (4) and can be separated from the at least one core device (1), **characterised in that** the at least one first attachable device (4) is connectable to the at least one core device (1) and separable from the at least one core device (1) via at least one first slidable connection between the at least one core device (1) and the at least one first attachable device (4).

2. Electronic device arrangement according to claim 1, **chararcterised in that** the at least one first attachable device (4) comprises at least one sensor.

3. Electronic device arrangement according to claim 1 or 2, **characterised in that** the at least one first attachable device (4) comprises at least one switch.

4. Electronic device arrangement according to one of claim 1 to 3, **characterised in that** the at least one first slidable connection comprises at least one first slide rail (9).

5. Electronic device arrangement according to one of claims 1 to 4, **characterised in that** the at least one first attachable device (4) is connectable to one of at least three side surfaces of the at least one core device (1) and is separable from the one of the at least three side surfaces of the at least one core device (1).

6. Electronic device arrangement according to one of claims 1 to 5, **characterised in that** at least the at least one core device (1) has a cuboid shape.

7. Electronic device arrangement according to one of claims 1 to 6, **characterised in that** the at least one power supply unit (2) and the at least one processor unit (3) are connectable to each other and are separable from each other via at least one second slidable connection between the at least one power supply unit (2) and the at least one processor unit (3).

8. Electronic device arrangement according to one of claims 1 to 7, **characterised in that** the at least one power supply unit (2) comprises a battery for a standalone operation of the electronic device arrangement.

9. Electronic device arrangement according to one of claims 1 to 8, **characterised in that** the at least one core device (1) comprises at least one first antenna (7) for radio-based data transmission from and/or to the electronic device arrangement.

10. Electronic device arrangement according to claim 9, **characterised in that** the at least one first antenna (7) is a long-range radio antenna.

11. Electronic device arrangement according to one of claims 1 to 10, **characterised in that** the at least one core device (1) comprises at least one memory unit.

12. Electronic device arrangement according to claim 11, **characterised in that** a computer program product is stored in the memory unit comprising firmware for the first attachable device (4) and at least one second attachable device (5).

13. Electronic device arrangement according to one of claims 1 to 12, **characterised in that** the signal connection between the at least one core device (1) and the at least one first attachable device (4) is an inter-integrated circuit connection.

14. Data transmission network comprising at least two electronic device arrangements according to one of claims 1 to 13, **characterised in that** at least a first electronic device arrangement (12) and a second electronic device arrangement (13) are configured for radio-based data transmission between at least the first electronic device arrangement (12) and the second electronic device arrangement (13).
